(19) **Europäisches Patentamt / European Patent Office / Office européen des brevets**

(11) **EP 2 031 780 A2**

(12) **EUROPÄISCHE PATENTANMELDUNG**

(43) Veröffentlichungstag:
04.03.2009 Patentblatt 2009/10

(51) Int Cl.:
*H04B 17/00* (2006.01)

(21) Anmeldenummer: 08015124.4

(22) Anmeldetag: 27.08.2008

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **28.08.2007 DE 102007040419**

(71) Anmelder: **Fraunhofer-Gesellschaft zur Förderung der Angewandten Forschung e.V. 80686 München (DE)**

(72) Erfinder:
• **Ulbricht, Gerald**
 **91227 Leinburg-Diepersdorf (DE)**
• **Seegerer, Georg**
 **92723 Taennesberg (DE)**

(74) Vertreter: **Schenk, Markus et al Patentanwälte Schoppe, Zimmermann Stöckeler & Zinkler Postfach 246 82043 Pullach (DE)**

(54) **Vorrichtung und Verfahren zum Bestimmen einer genutzten Übertragungskapazität eines Basisstationssendeempfängers**

(57) Vorrichtung (100) zum Bestimmen einer genutzten Sendekapazität eines Basisstationssendeempfängers zum Senden eines Sendesignals mit einem Empfänger (110), mit dem das Sendesignal empfangbar ist und einem Detektor (120) zum Überprüfen einer Anzahl von nutzbaren Sendekanälen aus dem Sendesignal auf deren Nutzung hin. Die Vorrichtung (100) umfasst ferner eine Recheneinheit (130) zum Berechnen der genutzten Sendekapazität basierend auf einem Ergebnis der Überprüfung.

FIG 1

EP 2 031 780 A2

**Beschreibung**

Die vorliegende Erfindung bezieht sich auf die Bestimmung von genutzten Übertragungskapazitäten, wie sie z. B. an Basisstationssendeempfängern von Mobilfunksystemen durchgeführt werden kann.

Bereits die heutige Ausdehnung von Mobilfunksystemen, die sowohl aus dem kommerziellen Bereich als auch dem privaten Bereich der Gesellschaft nicht mehr weg zu denken ist, erfordert eine sehr komplexe Infrastruktur. Weltweit nimmt die Nutzung der Mobilfunksysteme stetig zu und erfordert somit einen kontinuierlichen Ausbau der dazu erforderlichen Mobilfunkinfrastruktur, d. h. der dazu erforderlichen Basisstationen und Antennensysteme. Immer mehr Mobilfunkbetreiber versuchen sich gleichzeitig einen Teil des Marktes zu sichern. Wenn immer mehr Mobilfunkbetreiber eine flächendeckende Versorgung gewährleisten möchten, ist die Folge, dass die Infrastruktur immer weiter ausgebaut werden muss, d. h. immer mehr Basisstationen und Antennen aufgebaut werden. In manchen Ländern ist es inzwischen schwierig geworden, gegen Umweltschützer und Bürgerinitiativen weitere Senderstandorte durchzusetzen. In anderen Ländern ist inzwischen ein "Wildwuchs" an Sendemasten entstanden, die das Stadt- und Landschaftsbild stören. Beispielsweise hat die Stadt Jakarta in Indonesien den Mobilfunkbetreibern eine gemeinsame Nutzung von Sendeanlagen zur Auflage gemacht. Bestehende Sendeanlagen müssen dort sogar wieder abgebaut werden.

Ein Lösungsansatz, um die Koexistenz vieler Mobilfunkanbieter bei überschaubarer Infrastruktur zu gewährleisten, ist den Betreibern die gemeinsame Nutzung von beispielsweise Sendeantennensystemen vorzuschreiben. Da der Marktanteil der verschiedenen Mobilfunkbetreiber zum Teil sehr weit auseinander geht, ist es hier gewünscht, den Funkverkehr der verschiedenen Betreiber zu erfassen und die Investitions- und Betriebskosten entsprechend dem jeweiligen Datenverkehrsaufkommen auf die Betreiber zu verteilen bzw. anzupassen. Hierbei erweist es sich als problematisch, dass diese Information aus den Verbindungsdaten nur schwer zu extrahieren ist, d. h. nur mit erheblichem technischem Aufwand und andererseits diese von den Mobilfunkbetreibern nicht erwünscht ist, da beispielsweise die übermittelten Daten geheim gehalten werden sollen.

Eine Erfassung eines solchen betreiberabhängigen Datenverkehrsaufkommens kann bereits bei der gemeinsamen Nutzung von Sendemasten oder Containern für die Infrastruktur interessant sein. Aus den oben genannten Gründen ist aber eine gemeinsame Nutzung von Antennensystemen oder Antennenstrukturen von besonderem Interesse.

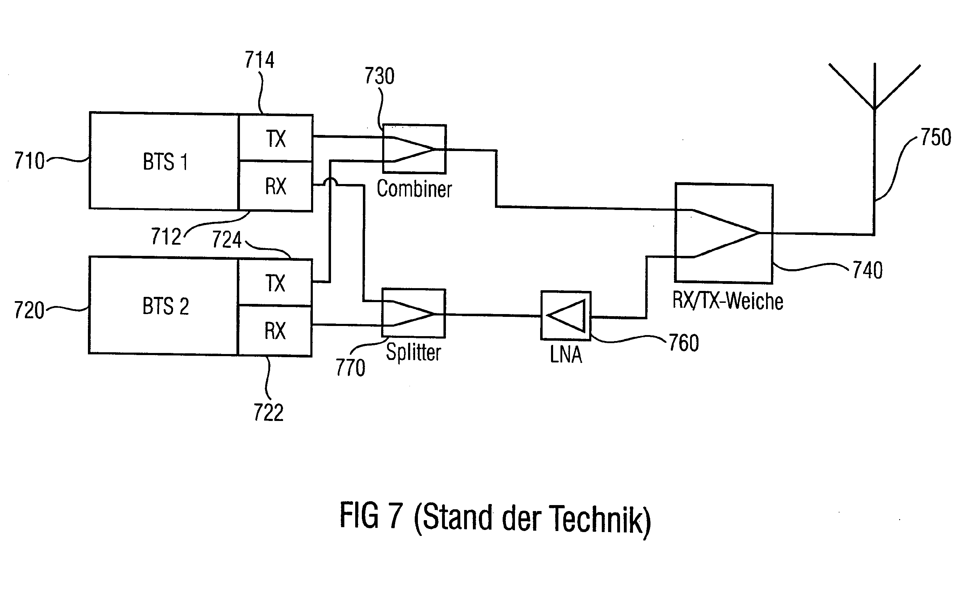

Die Fig. 7 illustriert ein Szenario mit zwei Basisstationssendeempfängern 710 und 720, die auch mit "BTS 1" und "BTS 2" bezeichnet sind (BTS = Base Transceiver Station, Basisstationssendeempfänger). Der Basisstationssendeempfänger 710 verfügt dabei über ein Empfangsteil 712, das auch mit "RX" bezeichnet ist (RX = Receiver, Empfänger) und einem Sendeteil 714, das auch mit "TX" (TX = Transmitter, Sender) bezeichnet ist. Ausgehend von den beiden Sendestufen 714 und 724 werden die beiden Sendesignale der beiden Basisstationssendeempfänger 710 und 720 über einen Combiner 730 kombiniert (Combiner = Kombinierer) und über eine Sendeempfangsweiche 740 an die Antenne 750 geleitet. Die Sendeempfangsweiche 740, die auch mit "RX/TX-Weiche" bezeichnet ist, trennt dabei Sende- und Empfangssignale, d. h. Signale, die von dem Kombinierer 730 kommen, werden an die Antenne 750 weitergeleitet und Signale, die von der Antenne 750 kommen, werden zunächst an einen Hochfrequenzeingangsverstärker 760, der auch mit "LNA" bezeichnet ist (LNA = Low Noise Amplifier, Verstärker mit geringer Rauschzahl) geleitet. Das Ausgangssignal des Hochfrequenzverstärkers 760 wird dann in einem Splitter 770 aufgeteilt und den beiden Empfangsstufen 712 und 722 der beiden Basisstationssendeempfänger 710 und 720 zugeführt.

Die Fig. 7 zeigt dabei eine von mehreren Möglichkeiten, wie zwei oder auch mehrere Basisstationssendeempfänger eine gemeinsame Antenne nutzen können. Das von der Antenne 750 kommende Empfangssignal wird nach der Sendeempfangsweiche 740, die beispielsweise durch einen Duplexfilter realisiert sein kann, zunächst rauscharm verstärkt und dann über einen gewöhnlichen Leistungsteiler oder Splitter 770 zu den Empfängern 712 und 722 der Basisstationssendeempfänger 710 und 720 geführt, wobei prinzipiell auch mehrere Basisstationssendeempfänger denkbar sind. Die Sendesignale der Basisstationssendeempfänger 710 und 720, bzw. der weiteren Basisstationssendeempfänger, werden über einen Combiner bzw. Kombinierer 730 zusammengeführt und dann über die Sendeempfangsweiche 740 der Antenne 750 zugeführt. Der Kombinierer 730 kann beispielsweise durch einen Filtercombiner oder einen Hybridcombiner realisiert werden.

Filtercombiner stellen in der Regel sehr steilflankige abstimmbare Filter dar, die entsprechende Nachteile mit sich bringen können. Hybridcombiner weisen in der Regel eine hohe Eigendämpfung auf, so dass in der Praxis auch andere Lösungen zwischen den Basisstationssendeempfängern verwendet werden.

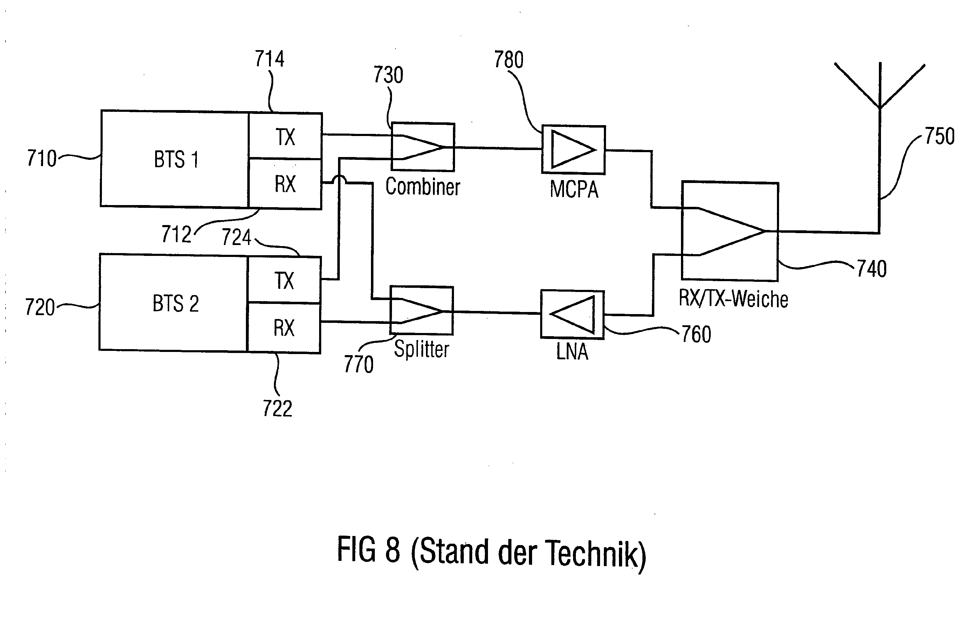

Die Fig. 8 zeigt ein ähnliches Szenario wie die Fig. 7. Im Unterschied zur Fig. 7 sei bei den Basisstationssendeempfängern der Fig. 8 eine Leistungsendstufe nicht in die Sendestufen 714 und 724 integriert, so dass die Signale des Sendepfades bereits vor dem Leistungsverstärker beispielsweise durch einen Hybridcombiner 730 zusammengeführt werden können. Ein Leistungsverstärker 780 folgt dann erst nach Kombination der Sendesignale in dem Kombinierer 730. Beispielsweise kann als Leistungsverstärker 780 hier ein Mehrträger-Leistungsverstärker 780, der in der Fig. 8 auch als MCPA (MCPA = Multi Carrier Power Amplifier, Mehrträger-leistungsverstärker) bezeichnet ist, zum Einsatz kommen. Nachteilig an einer solchen Lösung ist, dass hohe Anforderungen an die Linearität des Leistungsverstärkers 780 gestellt werden.

Im Bereich der konventionellen Technik sind verschiedene Möglichkeiten bekannt, Antennen durch mehrere Basisstationen zu nutzen. Problematisch hinsichtlich der zukünftigen Entwicklung von Mobilfunksystemen, ist jedoch die Bestimmung des Nutzungsanteils einer Antenne, die von mehreren Basisstationssendeempfängern gleichzeitig benutzt wird.

Mit Konzepten aus der konventionellen Technik kann eine Abrechnung der Investitions- und Betriebskosten für gemeinsam genutzte Mobilfunk-Infrastruktur, wie beispielsweise Container, Sendemasten, Antennen usw., nicht effizient gemäß der Nutzung durch die verschiedenen Betreiber ermöglicht werden.

Es ist die Aufgabe der vorliegenden Erfindung, eine Vorrichtung und ein Verfahren zu schaffen, die eine Bestimmung einer genutzten Übertragungskapazität eines Basisstationssendeempfängers ermöglichen.

Die Aufgabe wird gelöst durch eine Vorrichtung gemäß Anspruch 1, ein Verfahren gemäß Anspruch 10, eine Vorrichtung gemäß Anspruch 11 und ein Verfahren gemäß Anspruch 19, sowie ein System gemäß Anspruch 21.

Die Aufgabe wird gelöst durch eine Vorrichtung zum Bestimmen einer genutzten Sendekapazität eines Basisstationssendeempfängers zum Senden eines Sendesignals, mit einem Empfänger, mit dem das Sendesignal empfangbar ist und einem Detektor zum Überprüfen einer Anzahl von nutzbaren Sendekanälen aus dem Sendesignal auf deren Nutzung hin. Die Vorrichtung weist ferner eine Recheneinheit zum Berechnen der genutzten Sendekapazität basierend auf einem Ergebnis der Überprüfung auf.

Die Aufgabe wird ferner gelöst durch eine Vorrichtung zum Bestimmen einer genutzten Übertragungskapazität eines Basisstationssendeempfängers zum Empfangen eines Empfangssignals mit einem Empfänger, mit dem das Empfangssignal empfangbar ist und einem Detektor zum Überprüfen einer Anzahl von nutzbaren Empfangskanälen aus dem Empfangssignal auf deren Nutzung hin. Die Vorrichtung weist ferner eine Recheneinheit zum Berechnen der genutzten Sendekapazität basierend auf einem Ergebnis der Überprüfung auf.

Der Kerngedanke der vorliegenden Erfindung besteht darin, dass eine genutzte Übertragungskapazität eines Basisstationssendeempfängers von außen überprüfbar ist, in dem Empfangssignale oder/und Sendesignale ausgewertet werden. Bei Basisstationssendeempfängern kommen FDMA (FDMA = Frequency Division Multiple Access, Frequenzbereichsvielfachzugriffsverfahren), TDMA (TDMA = Time Division Multiple Access, Zeitbereichsvielfachzugriffsverfahren), CDMA (CDMA = Code Division Multiple Access, Codebereichsvielfachzugriffsverfahren), OFDMA (OFDMA = Orthogonal Frequency Division Multiple Access, orthogonales Frequenzbereichsvielfachzugriffsverfahren) usw. zum Einsatz. Basierend auf der Kenntnis des Vielfachzugriffsverfahrens können aus Empfangs- bzw. Sendesignalen aktive Übertragungskanäle detektiert werden, und somit eine Nutzung von Übertragungskapazitäten bestimmt werden. Die so bestimmten genutzten Übertragungskapazitäten können dann Aufschluss darüber liefern, welche Basisstation welchen Nutzungsanteil an einer gemeinsam verwendeten Antenne hat.

Ausführungsbeispiele der vorliegenden Erfindung bieten den Vorteil, dass Nutzungskapazitäten von Basisstationssendeempfängern an Antennen von außen bestimmt werden können, ohne das die gesendeten Nutzdaten detektiert werden. Ausführungsbeispiele können beispielsweise auch lediglich eine Aktivität von Sendekanälen, ohne jedoch die tatsächlich gesendeten Daten in diesen Übertragungskanälen zu detektieren, bestimmen. In Ausführungsbeispielen kann es lediglich notwendig sein, so genannte Dummydaten, die gesendet werden, um eine Sendeendstufe in einem bestimmten Frequenzbereich bei möglichst konstanter Leistung zu betreiben und um Nichtlinearitäten in der Verstärkerkennlinie zu vermeiden, von tatsächlichen Nutzdaten zu unterscheiden. Ausführungsbeispiele können diese Unterscheidung ohne Detektion der Nutzdaten bewerkstelligen.

Ausführungsbeispiele der vorliegenden Erfindung werden im Folgenden anhand der beiliegenden Figuren im Detail erläutert. Es zeigen:

Fig. 1     ein Ausführungsbeispiel einer Vorrichtung zum Bestimmen einer genutzten Sendekapazität eines Basisstationssendeempfängers;

Fig. 2     ein Ausführungsbeispiel einer Vorrichtung zum Bestimmen einer genutzten Empfangskapazität eines Basisstationssendeempfängers;

Fig. 3     ein Ausführungsbeispiel eines Szenarios mit einer Vorrichtung zum Bestimmen einer genutzten Sende- kapazität und einer Vorrichtung zum Bestimmen ei- ner genutzten Empfangskapazität eines Basisstati- onssendeempfängers;

Fig. 4     ein weiteres Ausführungsbeispiel zum Bestimmen einer Übertragungskapazität bei mehreren Frequen- zen;

Fig. 5     ein Ausführungsbeispiel einer Vorrichtung zum Bestimmen einer Übertragungskapazität mit einer Analog-Digital-Wandlung;

Fig. 6     ein weiteres Ausführungsbeispiel einer Vorrichtung zum Bestimmen einer Übertragungskapazität mit einem komplexen Mischer;

Fig. 7     ein Szenario einer von zwei Basisstationssende- empfängern gemeinsam genutzten Antenne gemäß dem Stand der Technik; und

Fig. 8 ein weiteres Szenario einer von zwei Basisstationssendeempfängern gemeinsam genutzten Antenne.

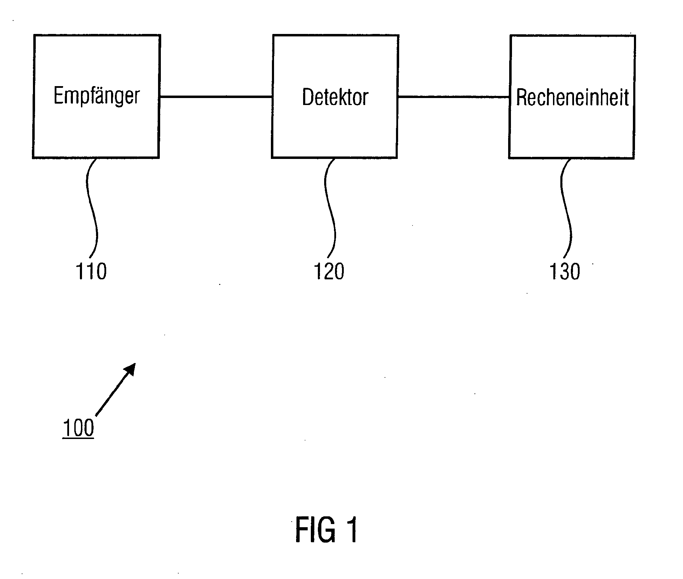

Die Fig. 1 zeigt eine Vorrichtung 100 zum Bestimmen einer genutzten Sendekapazität eines Basisstationssendeempfängers zum Senden eines Sendesignals mit einem Empfänger 110 mit dem das Sendesignal empfangbar ist und einem Detektor 120 zum Überprüfen einer Anzahl von nutzbaren Sendekanälen aus dem Sendesignal auf deren Nutzung hin. Die Vorrichtung 100 umfasst ferner eine Recheneinheit 130 zum Berechnen der genutzten Sendekapazität basierend auf einem Ergebnis der Überprüfung.

In Ausführungsbeispielen kann der Detektor 120 ausgebildet sein, um die Nutzung der nutzbaren Sendekanäle unabhängig von gesendeten Daten in den Sendekanälen zu überprüfen. Dies bedeutet, dass Teilnehmerkanäle zwar auf Aktivität überprüft werden, die eigentlichen Daten der Teilnehmer jedoch nicht entschlüsselt oder detektiert werden. In Ausführungsbeispielen kann der Detektor 120 vielmehr ausgebildet sein, um das Sendesignal hinsichtlich genutzter Frequenzen, Zeitschlitze oder Codes zu überprüfen, wobei ein Sendekanal einer Frequenz, einem Zeitschlitz, einem Code, einer Mehrzahl von Frequenzen, oder auch einer Kombination dergleichen zuordenbar sein kann. Der Detektor kann dabei ausgebildet sein, um das Sendesignal beispielsweise gemäß den Standards des GSM (GSM = Global System for Mobile Communications, globales Mobilfunksystem), gemäß UMTS (UMTS = Universal Mobile Telecommunication System, universelles Mobiltelekommunikationssystem), gemäß LTE (LTE = Long Term Evolution, langzeitentwickeltes Mobilfunksystem), die alle über entsprechende Spezifikationen verfügen auf die Nutzung von Sendekanälen hin zu überprüfen. Dabei sind Ausführungsbeispiele nicht auf die genannten Mobilfunksysteme beschränkt, diese stellen nur Beispiele für spezifizierte oder in der Spezifikation befindliche Mobilfunksysteme dar. Generell sind auch andere Standards oder Spezifikationen denkbar, wie beispielsweise IEEE 802.11, IS 95 usw.

In Ausführungsbeispielen kann der Detektor 120 ferner ausgebildet sein, um eine Nutzung eines Sendekanals über eine Leistungsdetektion in dem Sendekanal zu überprüfen. Der Empfänger 110 kann in Ausführungsbeispielen eine Empfangsantenne zum Empfangen des Sendesignals aufweisen. In diesem Fall könnte nahe der Basisstationssendeantenne eine Empfangsantenne angeordnet sein, die das Sendesignal des Basisstationssendeempfängers empfängt und dem Empfänger 110 zuführt. In einem anderen Ausführungsbeispiel könnte der Empfänger 110 einen Richtkoppler oder Leistungsteiler aufweisen, der in den Sendepfad eines Basisstationssendeempfängers ankoppelbar ist, um dort ein entsprechendes Sendesignal anzukoppeln. Dabei kann beispielsweise auch ein Dämpfungsglied zum Dämpfen des Sendesignals zum Einsatz kommen. In weiteren Ausführungsbeispielen könnte die Vorrichtung 100 ferner ein Modem aufweisen, das aus dem Sendesignal Informationen detektiert, wie beispielsweise eine Kennung des Basisstationssendeempfängers, aus der sich wiederum auf die genutzten Frequenzen, Zeitschlitze oder ähnliche Systemparameter schließen lässt. Das Modem könnte in Ausführungsbeispielen ausgebildet sein, um die nutzbaren Sendekanäle aus einem Kontrollkanal des Basisstationssendeempfängers zu bestimmen. Das Modem kann ferner ausgebildet sein, um eine Identifikation des Basisstationssendeempfängers zu empfangen.

In Ausführungsbeispielen kann der Empfänger 110 ferner einen Mischer aufweisen, der mit einem Lokaloszillator gekoppelt ist, um das Sendesignal, das beispielsweise im Übertragungsband vorliegen kann, in einen Zwischenfrequenzbereich oder einen Basisbandbereich herunterzumischen. Der Mischer kann dabei auch beispielsweise als Quadraturmischer oder komplexer Mischer ausgebildet sein. In anderen Ausführungsbeispielen wäre es denkbar, dass der Empfänger 110 eine Mehrzahl von Mischern oder Lokaloszillatoren aufweist, um Signale verschiedener Trägerfrequenzen in entsprechende Zwischenfrequenz- oder Basisbandbereiche zu mischen. Es wäre auch denkbar, einen durchstimmbaren Lokaloszillator mit einem Mischer zu verwenden. Zum Ausfiltern eines Empfangskanals können nun verschiedene Filter zum Einsatz kommen. Beispielsweise wäre ein Kanalfilter zum Filtern eines Empfangskanals denkbar, der auf einem bestimmten Zeitschlitz, eine bestimmte Frequenz, einem bestimmten Code usw. abgestimmt ist. Zum Empfangen entsprechend vielfältiger Empfangskanäle kann der Empfänger 110 ferner eine Mehrzahl von Kanalfiltern zum Filtern einer Mehrzahl von Empfangskanälen aufweisen.

In Ausführungsbeispielen kann der Detektor 120 einen Leistungsdetektor umfassen, in Anlehnung an eine Detektion einer Vielzahl von Empfangskanälen kann der Detektor 120 entsprechend eine Vielzahl von Leistungsdetektoren aufweisen. In weiteren Ausführungsbeispielen kann der Recheneinheit 130 ein Schwellwertentscheider oder ein Analog-Digital-Wandler vorgeschaltet sein. Dabei wäre es auch denkbar, dass der Detektor 120 eine Synchronisationseinrichtung aufweist, zur Synchronisation mit einem zeitlichen Verlauf oder einer zeitlichen Rahmenstruktur des Sendesignals, um beispielsweise während einem Sendekanal genau einen oder auch mehrere oder eine vorbestimmte Zahl von Abtastwerten an die Recheneinheit weiterzugeben. Dabei wäre es beispielsweise denkbar, dass eine Information über die nutzbaren Sendekanäle von einem Benutzerinterface (Benutzerschnittstelle) aus übertragen werden, d. h. dass die Vorrichtung 100 von außen her mit der Information über die nutzbaren Sendekanäle konfiguriert werden kann. In einem weiteren Ausführungsbeispiel wäre es auch denkbar, dass die Information über die nutzbaren Sendekanäle von dem Modem empfangen werden.

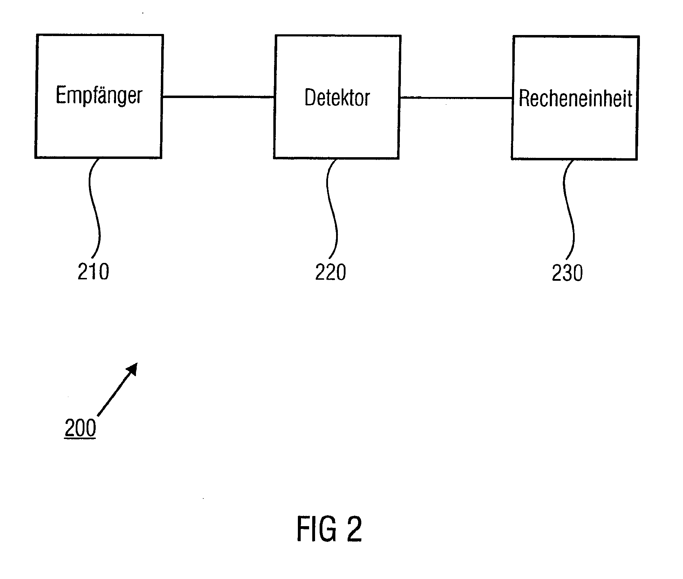

Die obigen Erläuterungen in Anlehnung an die Fig. 1 bezogen sich auf eine Bestimmung einer Sendekapazität, d. h. Auswertung von Sendesignalen. In einer weiteren Ausgestaltung umfasst die vorliegende Erfindung auch eine Vorrichtung 200 zum Bestimmen einer genutzten Übertragungskapazität eines Basisstationssendeempfängers zum Empfangen eines Empfangssignals, wie es im Ausführungsbeispiel der Fig. 2 im Detail erläutert werden wird. Die Fig. 2 zeigt eine Vorrichtung 200 zum Bestimmen einer genutzten Übertragungskapazität eines Basisstationssendeempfängers zum Empfangen eines Empfangssignals mit einem Empfänger 210, mit dem das Empfangssignal empfangbar ist und einen Detektor 220 zum Überprüfen einer Anzahl von nutzbaren Empfangskanälen aus dem Empfangssignal auf deren Nutzung hin. Die Vorrichtung 200 umfasst ferner eine Recheneinheit 230 zum Berechnen der genutzten Übertragungskapazität basierend auf einem Ergebnis der Überprüfung.

Ähnlich der bereits oben beschriebenen Ausgestaltungen des Detektors 120 kann auch der Detektor 220 ausgestaltet sein. In Ausführungsbeispielen kann der Detektor 220 beispielsweise ausgebildet sein, um die Nutzung der genutzten Übertragungskanäle unabhängig von den empfangenen Daten in den Empfangskanälen zu überprüfen. Der Detektor 220 kann dabei ausgebildet sein, um das Empfangssignal hinsichtlich genutzter Frequenzen, Zeitschlitze oder Codes zu überprüfen, wobei ein Empfangskanal einer Frequenz, einem Zeitschlitz, einem Code, einer Mehrzahl von Frequenzen oder einer Kombination dergleichen zuordenbar ist. Auch hier kann der Detektor 220 ausgestaltet sein, um Empfangssignale gemäß den bereits oben genannten Standards, GSM, UMTS, LTE, 802.11, IS 95, IS 136 usw., auf die Nutzung von Empfangskanälen hin zu überprüfen. Die Nutzung eines Empfangskanals kann dabei über eine Leistungsdetektion in dem Empfangskanal erfolgen. Der Empfänger 220 kann dabei einen rauscharmen Empfangsverstärker (LNA) aufweisen, der beispielsweise ein separates Empfangssignal über eine separate Empfangsantenne empfängt oder aber in den Empfangszweig des Basisstationssendeempfängers geschaltet ist. In einem weiteren Ausführungsbeispiel könnte der Empfänger 210 einen Richtkoppler oder Leistungsteiler aufweisen, der in den Empfangszweig des Basisstationssendeempfängers ankoppelbar ist, um das Empfangssignal auszukoppeln.

Der Empfänger 210 kann auch in diesen Ausführungsbeispielen einen Mischer und einen lokalen Oszillator aufweisen. Der Mischer kann in Ausführungsbeispielen als Quadraturmischer oder komplexer Mischer ausgeführt sein, in einem weiteren Ausführungsbeispiel ist auch eine Mehrzahl von Mischern und Lokaloszillatoren denkbar, um eine Mehrzahl von Frequenzen in einen Zwischenfrequenzbereich oder einen Basisbandbereich zu mischen. Auch hier können durchstimmbare Lokaloszillatoren eingesetzt werden. Zum Filtern der Empfangskanäle können beispielsweise Kanalfilter eingesetzt werden. In Ausführungsbeispielen kann entsprechend eine Mehrzahl von Kanalfiltern zum Filtern einer Mehrzahl von Empfangskanälen in dem Empfänger 210 vorhanden sein. Der Detektor 220 kann in Ausführungsbeispielen einen oder eine Mehrzahl von Leistungsdetektoren aufweisen. Der Recheneinheit 230 kann auch hier ein Schwellwertentscheider oder ein Analog-Digital-Wandler vorgeschaltet sein, der beispielsweise mit dem Detektor 220 durch eine Synchronisationseinrichtung hinsichtlich eines zeitlichen Verlaufes oder einer zeitlichen Rahmenstruktur des Empfangssignals synchronisiert wird. Auch hier wäre es denkbar, dass dem Detektor 220 die Information über die nutzbaren Empfangskanäle von außen vorgegeben wird, d. h. dass dieser über ein Benutzerinterface verfügt, über das die entsprechenden Empfangskanäle vorgegeben werden können. In einem weiteren Ausführungsbeispiel wäre es denkbar, dass diese Information von einem entsprechenden Modem empfangen werden.

Ausführungsbeispiele der vorliegenden Erfindung bieten die Möglichkeit, somit die anteilige Nutzung durch verschiedene Betreiber beispielsweise einer gemeinsamen Sendeantenne zu erfassen, um damit die Kosten fair verteilen zu können. Im Folgenden werden Ausführungsbeispiele am Beispiel eines GSM-Netzes im Detail erläutert. Der Lösungsweg wird nur exemplarisch am Beispiel für GSM-Mobilfunkbasisstationen beschrieben. Er lässt sich in gleicher Weise auch auf andere, insbesondere TDMA-Verfahren, wie beispielsweise dem IS 136 übertragen. Bei einem GSM-Netzwerk werden in einem bestimmten Gebiet einzelne Frequenzbereiche, die immer paarweise für die Aufwärtsstrecke (uplink = Aufwärtsstrecke) und die Abwärtsstrecke (downlink = Abwärtsstrecke) vergeben werden, und damit eine genau definierte Anzahl an Frequenzkanälen einem bestimmten Betreiber zugeordnet wird. Beispielsweise werden derzeit in Deutschland diese Kanäle bundesweit an die vier Mobilfunkbetreiber T-Mobil, Vodafone, e-Plus und 02 vergeben.

Wird ein Signal bei einer bestimmen Frequenz innerhalb eines bestimmten Frequenzkanals, der bei GSM 200 kHz Bandbreite umfasst, detektiert, so kann dies eindeutig einem der vier Betreiber zugeordnet werden.

GSM realisiert ein FDMA/TDMA-System. GSM verfügt also auch über eine Zeitschlitzkomponente, d. h. ein Zeitbereichsvielfachzugriffsverfahren, d. h., dass die Kommunikation zwischen Basisstationssendeempfänger und mobilem Endgerät in kurzen Zeitschlitzen stattfindet. Im GSM ist ein Zeitschlitz knapp 577 μs lang. Acht aufeinander folgende Zeitschlitze ergeben einen so genannten Frame (Frame = Rahmen), der etwa 4,6 ms ist. Dies bedeutet, dass in der Regel nur jeder achte Zeitschlitz für die Kommunikation mit einem Endgerät verwendet wird. Eine Ausnahme hierzu ist bei der Paketdatenübertragung zu finden, die im Bereich der GSM-Mobilfunknetzwerke über GPRS (GPRS = General Packet Radio Service, genereller Paketfunkdienst) erfolgen kann. Bei dieser Datenübertragung werden mehrere Zeitschlitze einem Endgerät zugeteilt, wodurch höhere Datenraten erzielbar werden. In den jeweils anderen Zeitschlitzen erfolgt die Kommunikation mit anderen Endgeräten. Damit lassen sich, im Bereich normaler Sprachverbindungen, pro Frequenzkanal maximal acht Endgeräte, d. h. acht Verbindungen aufbauen. Hierzu existiert wiederum im Bereich der GSM-Netzwerke eine Ausnahme, nämlich die der Halbratenübertragung (half-frate = Halbrate). In diesem Betriebsmodus wird nur die halbe Datenrate für die Sprachübertragung verwendet, was zwar Qualitätseinbußen nach sich ziehen kann, damit jedoch zwei Nutzer in einem Zeitschlitz mit Sprachdaten versorgt werden können.

Das Zeitschlitzverfahren äußert sich darin, dass nur dann ein Signal gesendet wird, wenn einem Zeitschlitz eine Verbindung zu einem mobilen Endgerät zugewiesen wurde. Ausnahmen hierzu bilden die so genannten Broadcastkanäle (Broadcast = Rundfunk). Der Basisstationssendeempfänger sendet auf mindestens einer Frequenz in allen Zeitschlitzen mit maximaler Leistung, damit die Endgeräte auf diesem Kanal immer ein Signal empfangen können, das wichtig ist, beispielsweise wenn die Mobilfunkendgeräte versuchen, sich in eine Zelle einzubuchen und das gesamte Frequenzband dazu scannen/absuchen. Dieser Frequenzkanal wird häufig BCCH (BCCH = Broadcast Control Channel, Rundfunkkontrollkanal) genannt, dem eine bestimmte Frequenz zugeordnet ist. Auf dieser Frequenz wird der so genannte Broadcast-Control-Channel übertragen, der alle wesentlichen Informationen für ein Mobilfunkendgerät zum Einbuchen in die jeweilige Zelle enthält. Falls nun weniger als sieben Endgeräte in einer Zelle Sprach- oder Datenverbindung aufrechterhalten, werden in den freien Zeitschlitzen Dummydaten übertragen, die aber von den Benutzerdaten unterschieden werden können.

In einem Ausführungsbeispiel wird demnach um den Datenverkehr innerhalb einer Funkzelle zu erfassen, die Anzahl der aktiven Zeitschlitze innerhalb ei-ner Zeitperiode detektiert und addiert. Dies kann sowohl in den Signalen geschehen, die von einem Basisstationssendeempfänger ausgesendet werden, als auch in Signalen, die von einem Basisstationssendeempfänger empfangen werden. Es sei darauf hingewiesen, dass in den Empfangssignalen eines Basisstationssendeempfängers die oben erwähnten Dummydaten nicht vorkommen, so dass hier beispielsweise eine einfache Detektion mit einem Leistungsdetektor erfolgen kann. Es ist also möglich, die von den Endgeräten ankommenden Signale in deren Zeitschlitzen zu erfassen, welche nur dann aktiv sind, wenn wirklich Datenverkehr auftritt.

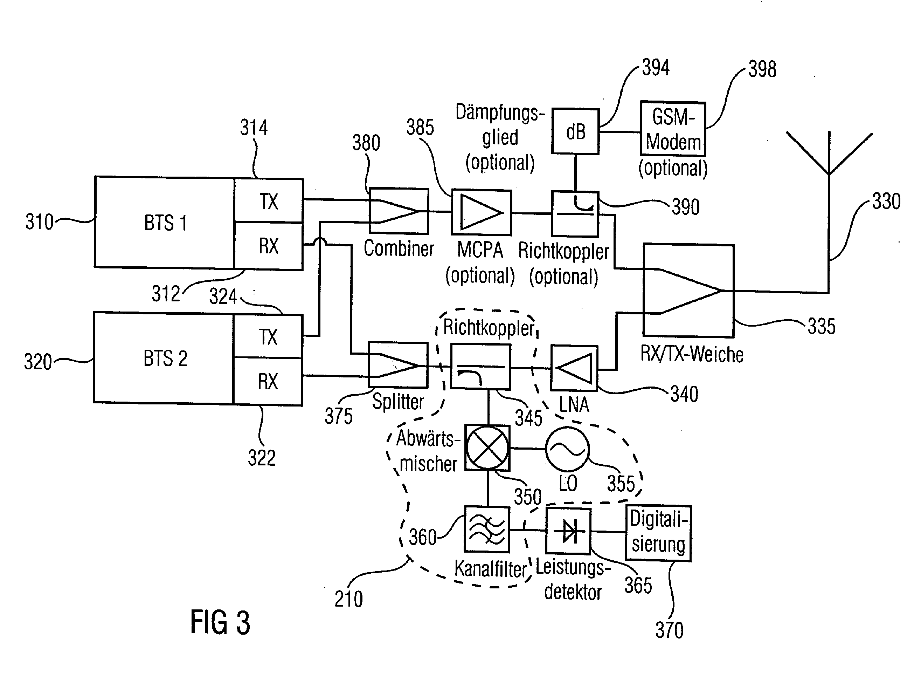

Die Fig. 3 zeigt ein Ausführungsbeispiel einer solchen Vorrichtung zum Bestimmen einer genutzten Übertragungskapazität. Fig. 3 zeigt einen ersten Basisstationssendeempfänger 310 mit einem Empfangsteil 312 und einem Sendeteil 314. Ferner zeigt die Fig. 3 einen zweiten Basisstationssendeempfänger 320, der ebenso über ein Empfangsteil 322 und eine Sendestufe 324 erfolgt. Wie bereits oben beschrieben werden die Signale über eine Antenne 330 empfangen bzw. gesendet, und in einer Sendeempfangsweiche 335, die auch als RX/TX-Weiche bezeichnet ist, in Sende- und Empfangssignale aufgeteilt. In dem Pfad der Empfangssignale befindet sich daher zunächst ein rauscharmer Hochfrequenzverstärker 340 (LNA), dem ein Richtkoppler 345 nachgeschaltet ist. Der Richtkoppler 345 koppelt dabei aus dem Empfangszweig einen Teil der Leistung des von dem LNA 340 verstärkten Empfangssignals aus und führt es einem Abwärtsmischer 350 zu. Der Abwärtsmischer 350 ist ferner mit einem Lokaloszillator 355 und einem Kanalfilter 360 verbunden.

Die Anordnung aus Richtkoppler 345, Abwärtsmischer 350, Lokaloszillator 355 und Kanalfilter 360 stellt dabei ein Ausführungsbeispiel eines Empfängers 210 mit dem das Empfangssignal empfangbar ist einer Vorrich-tung zum Bestimmen einer genutzten Übertragungskapazität eines Basisstationssendeempfänger dar. Der Abwärtsmischer 350 realisiert im Zusammenspiel mit dem Lokaloszillator 355 eine Umsetzung des Empfangssignals aus dem Übertragungsband in einen Zwischenfrequenzbereich oder einen Basisbandbereich. Die Frequenz des Lokaloszillators 355 kann dabei von dem auszuwählenden Empfangskanal abhängen, wobei der Empfangskanal über einen durchstimmbaren Lokaloszillator 355 dann variabel ist, so dass zwischen den Empfangskanälen der beiden Basisstationssendeempfänger 310 und 320 umgeschaltet werden kann. Dem Kanalfilter 360 ist ein Leistungsdetektor 365 zum Überprüfen einer Anzahl von nutzbaren Empfangskanälen aus dem Empfangssignal auf deren Nutzung hin nachgeschaltet. Beispielsweise detektiert der Leistungsdetektor die Leistung in einem Empfangskanal. Dem Leistungsdetektor 365 nachgeschaltet ist eine Recheneinheit oder Digitalisierung 370 zum Berechnen der genutzten Übertragungskapazität basierend auf dem Ergebnis der Überprüfung des Leistungsdetektors 365.

Analog zu obiger Beschreibung befindet sich in dem Empfangspfad ein Splitter 375, der die Empfangssignale auf die beiden Empfangsstufen 312 und 322 der beiden Basisstationssendeempfänger 310 und 320 aufzeigt. Die beiden Sendesignale der Sendestufen 314 und 324 werden mit einem Combiner 380 kombiniert und von einem Mehrträgerleistungsverstärker 385 (MCPA) verstärkt. Aus dem am Ausgang des Leistungsverstärkers 385 anliegenden Sendesignal kann wiederum über einen Richtkoppler 390 ein Teil der Leistung ausgekoppelt werden, der dann über ein optionales Dämpfungsglied 394 einem GSM-Modem 398 zugeführt werden. Das Dämpfungsglied 394 ist dabei optional und dient der Dämpfung des ausgekoppelten Sendesignals zur Anpassung an einen Eingang des GSM-Modems 398. Das GSM-Modem 398 ist ebenfalls optional und dient zur Detektion von Informationen aus dem Sendesignal, wie beispielsweise aus dem BCCH, um Informationen über die Basisstati-onssendeempfänger hinsichtlich derer nutzbaren Über-tragungskapazitäten zu extrahieren. Das Sendesignal passiert nach dem Richtkoppler 390 die Sendeempfangsweiche 335 und wird dann über die Antenne 330 abgestrahlt.

Das von der Antenne 330 kommende Empfangssignal wird nach der Sendeempfangsweiche 335 in einem Ausführungsbeispiel rauscharm verstärkt, mit dem Empfangsverstärker 340, um eine möglichst gute Empfindlichkeit zu erreichen. Danach kann ein Teil des Signals durch den Richtkoppler 345, alternativ kann auch hier ein Leistungsteiler eingesetzt werden, ausgekoppelt werden. Das ausgekoppelte Signal wird über den Abwärtsmischer 350 beispielsweise in einen geeigneten Zwischenfrequenzbereich gebracht. Anschließend können mit dem Kanalfilter 360 unerwünschte Frequenzanteile unterdrückt werden, so dass möglichst nur noch der gewünschte Frequenzkanal in dem Ausgangssignal des Kanalfilters 360 vorhanden ist. In Ausführungsbeispielen kann das Kanalfilter 360 dabei auch durchaus schmäler sein als ein entsprechender Standard die Bandbreite eines Kanals vorsieht. Es kann jedoch wichtig sein, dass es beim nächsten belegten Frequenzkanal, beispielsweise bei GSM sind der nächste und meist auch der übernächste Kanal in einer Zelle nicht belegt, ausreichend unterdrückt wird, um das Messergebnis nicht zu verfälschen.

Dies kann insbesondere wichtig sein, bei der Detektion eines Empfangssignals, da hier abhängig vom Abstand der Endgeräte das Signal im nächsten belegten Kanal deutlich höher sein kann als das zu Detektierende. Nach dem Kanalfilter 360 kann die Leistung beispielsweise mit einem Leistungsdetektor 365 in eine von der Eingangsleistung abhängige Spannung umgewandelt werden. Hier würden sich in Ausführungsbeispielen die logarithmischen Leistungsdetektoren anbieten, die über einen sehr großen Dynamikbereich von mehreren 10dB eine Leistung sehr genau detektieren können.

Die Ausgangsspannung des Leitungsdetektors 365 kann in Ausführungsbeispielen optional über ein Tiefpassfilter geglättet werden. Dieses kann wiederum bei der Messung von EDGE-Signalen (EDGE = Enhanced Data Rates for GSM Evolution, verbesserte Datenraten für GSM-Evolution) wichtig sein, EDGE-Signale ermöglichen eine um einen Faktor drei höhere Datenrate im GSM-Netzwerk. Bei diesen Signalen kann die Amplitude im Gegensatz zu sonst üblichen GMSK-Modulationen (GMSK = Gaussian Minimum Shift Keying) nicht konstant innerhalb eines Zeitschlitzes sein. Bei einer geeigneten Wahl der Zeitkonstante des optionalen Tiefpasses kann die Amplitudenmodulation im EDGE-Signal weitgehend geglättet und so die Messgenauigkeit erhöht werden. Der Tiefpass ist wie bereits erwähnt lediglich optional und auf ihn kann verzichtet werden, beispielsweise wenn das Signal mit ausreichender Abtastrate abgetastet wird und die mittlere Leistung errechnet wird, was durch eine Digitalisierung 370 verwirklicht werden kann.

Die digitale Erfassung durch die Recheneinheit 370 der leistungsabhängigen Ausgangsspannung des Detektors 365 kann auf vielerlei Arten erfolgen. In einem ersten Ausführungsbeispiel könnte z. B. eine einfache Schwellwertentscheidung stattfinden, die z. B. einen digitalen High-Pegel ausgibt, wenn der Spannungswert eine bestimmte Schwelle überschreitet. Der Schwellwert könnte so gelegt werden, dass er der Empfindlichkeitsgrenze des Basisstationssendeempfängers entspricht. Mit der digitalen Verarbeitungseinheit 370 können diese Ereignisse erfasst werden. In einem anderen Ausführungsbeispiel könnte ein Analog-Digital-Umsetzer, der den Spannungswert in einen entsprechenden Digitalwert umsetzt, zum Einsatz kommen.

Die Erfassung der Messwerte kann dabei so oft erfolgen, dass jeder Zeitschlitz sicher erfasst wird. Dies könnte beispielsweise gewährleistet werden, indem eine Synchronisation der Abtastung auf das Zeitschlitzschema stattfindet und beispielsweise immer in der Mitte eines Zeitschlitzes der Pegel erfasst wird. Am Beispiel von GSM würde dies einer Messrate von 1.733,3Hz entsprechen, in anderen Mobilfunksystemen ergäben sich entsprechend andere Frequenzen. In einem anderen Ausführungsbeispiel wäre es denkbar, so häufig zu messen, dass immer mehrere Messwerte auf einen Zeitschlitz fallen, am Beispiel von GSM entspräche dies einer Frequenz von wenigstens 3.500Hz.

Wie bereits oben erwähnt, dienen Abwärtsmischer 350 und Lokaloszillator 355 sowie Kanalfilter 360 zur Umsetzung eines Empfangskanals aus dem Übertragungsband in einen Zwischen- oder Basisbandfrequenzbereich. In einem Ausführungsbeispiel kann nun, um festzulegen, bei welchem Frequenzkanal gemessen werden soll, dieser über eine Benutzerschnittstelle vorgegeben werden. In solchen Ausführungsbeispielen verfügt die erfindungsgemäße Vorrichtung also über ein Interface, über das von außen durch einen entsprechenden Benutzer die entsprechenden Frequenzkanäle vorgegeben werden können. Da sich jedoch an Basisstationssendeempfängern die benutzten Frequenzen und die damit benutzten Übertragungskanäle gelegentlich ändern können, was beispielsweise durch Erweiterungen des Mobilfunknetzes durch zusätzliche Basisstationssendeempfänger geschehen kann, wäre auch eine automatische Einstellung denkbar. Dazu kann in Ausführungsbeispielen beispielsweise ein GSM-Modem 398 eingesetzt werden, wie es in der Fig. 3 gezeigt ist. Generell sind in Ausführungsbeispielen jedoch beliebige geeignete GSM-Endgeräte denkbar. Über den Richtkoppler 390, der in dem Sendepfad der beiden Basisstationssendeempfänger angeordnet ist, wird ein Teil der Sendeleistung, gegebenenfalls über ein Dämpfungsglied 394, um die Sendeleistung auf die Empfindlichkeit des GSM-Modems 398 anzupassen, ausgekoppelt.

Das Modem 398 kann dann beispielsweise durch einen Scan, also eine Überprüfung aller in Frage kommenden Frequenzbereiche, in der Lage sein, aus den empfangenen BCCHs (Rundfunkkanäle), den Basisstationssendeempfänger und die ihm zugeordneten Frequenzkanäle eindeutig zu identifizieren. Dies könnte beispielsweise durch die standardisierten Werte Base Station Identification Code (BSIC, Basisstationssendeempfängeridentifizierungscode), Mobile Country Code (MCC, Länderkennung) und Mobile Network Code (MNC, Netzwerkkennung), Location Area Code (LAC, Netzbereichskennung), Cell Identifier (Zellkennung) und Cell Allocation (CA, Zellresourcenkennung), erfolgen. In Ausführungsbeispielen liegen somit die Informationen vor, bei welchen Frequenzkanälen gemessen werden soll und welchem Basisstationssendeempfänger diese Messwerte zuzuordnen sind.

In Ausführungsbeispielen muss das Modem 398 nicht notwendigerweise über einen Koppler oder Richtkoppler 390 an den Sendepfad angekoppelt werden. In Ausführungsbeispielen ist es auch möglich, dass das Modem 398 über eine eigene Antenne die über die Basisstationsantenne ausgesendeten Signale empfängt. In solchen Ausführungsbeispielen ist es ferner sinnvoll, dass über das Userinterface die BSIC oder cell ID vorgegeben wird, da nicht ausgeschlossen werden kann, dass das Modem 398 auch Signale von anderen Basisstationssendeempfängern empfängt.

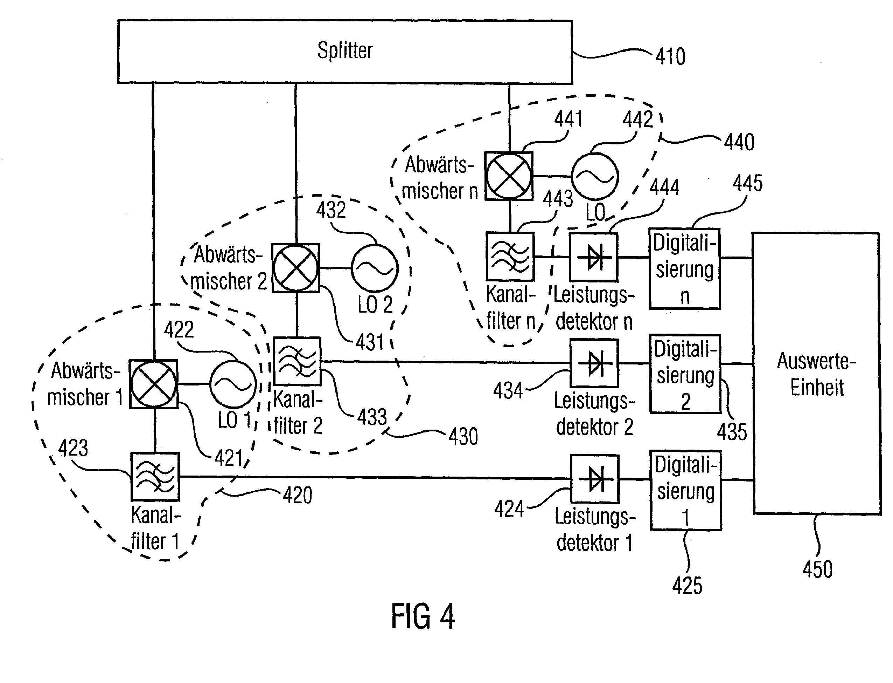

Wie bereits oben erläutert, kann der gemessene Frequenzkanal beispielsweise über die Wahl des Lokaloszillators 355 eingestellt werden. Hier sind in Ausführungsbeispielen ebenfalls verschiedene Strategien denkbar. In einem Ausführungsbeispiel, das eine relativ hohe Genauigkeit erreicht, könnte für jeden zu messenden Frequenzkanal ein eigener Abwärtsmischer verwendet werden. Die Fig. 4 illustriert ein solches Ausführungsbeispiel. Die Fig. 4 zeigt einen Splitter 410, der sich im Empfangspfad mehrerer Basisstationssendeempfänger befinden soll. Die Anzahl der Basisstationssendeempfänger, in deren Empfangspfad sich der Splitter 410 befindet, sei beliebig. Dem Splitter 410 nachgeschaltet befinden sich nun mehrere an die jeweiligen Frequenzkanäle angepasste Empfänger, wobei in der Fig. 4 die Empfänger 420, 430 und 440 dargestellt sind. Jeder Empfänger setzt sich dabei aus einem Abwärtsmischer 421, 431, 441, dem das Signal des Splitters 410 zugeführt wird und einem Lokaloszillator 422, 432, 442 zusammen. Den Ausgangssignalen der Abwärtsmischer 421, 431, 441 ist ein Kanalfilter 423, 433, 443 nachgeschaltet, um den jeweiligen Frequenzkanal zu extrahieren, wobei in dem Ausführungsbeispiel, das in der Fig. 4 illustriert ist, davon ausgegangen wird, dass die jeweiligen Kanalfilter 423, 433, 443 unterschiedliche Frequenzkanäle ausfiltern.

In der Fig. 4 ist jedem der Empfänger 420, 430, 440 ein Leistungsdetektor 424, 434, 444 nachgeschaltet. Anschließend erfolgt in dem Ausführungsbeispiel der Fig. 4 eine Digitalisierung der Ausgangssignale der Leistungsdetektoren 424, 434, 444 über die Digitalisierungen 425, 435 und 445. Die Ausgänge der Digitalisierungen 425, 435, 445 werden dann einer Auswerteeinheit 450 zur Auswertung zugeführt. Die Auswerteeinheit 450 stellt dabei eine Recheneinheit dar, zum Berechnen der genutzten Übertragungskapazität basierend auf dem Ergebnis der Überprüfung durch die Leistungsdetektoren 424, 434, 444.

Die Fig. 4 zeigt beispielhaft drei Empfangszweige, in denen drei Frequenzkanäle detektiert werden können. Allgemein sind in Ausführungsbeispielen beliebig viele Empfangskanäle denkbar, was in der Fig. 4 durch die Nummerierung 1, 2, n zum Ausdruck gebracht werden soll. Sollen in einem Ausführungsbeispiel beispielsweise zehn Frequenzen überwacht werden, so würde das Empfangssignal nach der Auskopplung auf zehn Pfade aufgeteilt werden, wobei jeder Kanal dann über einen eigenen Detektor erfasst werden kann.

Kostengünstigere Ausführungsbeispiele realisieren die in der Fig. 4 gezeigte Struktur mit nur einem Pfad, wobei hier ein schnell schaltender Lokaloszillator eingesetzt werden kann, der in der Lage ist, innerhalb eines Zeitschlitzes alle oder zumindest mehrere Kanäle zu erfassen. Dies kann beispielsweise dadurch ermöglicht werden, dass die Anforderungen an das Phasenrauschen und die spektrale Reinheit des Lokaloszillators nicht sehr hoch sind. Ein Einschwingverhalten eines solchen Lokaloszillators und die Zeitkonstante eines eventuell eingesetzten Tiefpasses vor den Detektoren könnten in solchen Ausführungsbeispielen entsprechend angepasst werden.

Alternativ könnte in Ausführungsbeispielen, die über einen längeren Zeitraum Messungen erfassen, eine kostengünstige Realisierung erzielt werden, wenn pro Zeitschlitz jeweils nur ein Kanal erfasst wird, und danach quasi zufällig auf andere Kanäle umgeschaltet wird. Da sich der Zeitraum einer Verbindung auf eine große Zahl von Zeitschlitzen verteilt, ist in Ausführungsbeispielen auch eine statistische Erfassung denkbar. Dabei können beispielsweise die von einem Basisstationssendeempfänger genutzten Frequenzkanäle iterativ durchgescannt werden.

In alternativen Ausführungsbeispielen könnte beispielsweise die Kanalfilterung nicht analog durchgeführt werden, sondern das gesamte Frequenzband abgetastet und somit die Leistungsbestimmung der Einzelkanäle auch digital durchgeführt werden. Dabei könnte beispielsweise durch eine Abwärtsmischung das Signal in einen geeigneten Zwischenfrequenzbereich gebracht werden, wo das interessierende Frequenzband dann mit einem Bandpass gefiltert werden kann, um bei einer späteren Abtastung Aliasing zu vermeiden. Am Beispiel von GSM mit einer Trägerfrequenz von 900 MHz entspräche dies einer Bandbreite von etwa 35 MHz. Um die Nyquist-Bedingungen zu erfüllen, wird das Signal dann so abgetastet, dass die Abtastfrequenz wenigstens zweimal der Bandbreite entspricht. Abtastrate und Zwischenfrequenz können in Ausführungsbeispielen dabei so gewählt werden, dass das gesamte interessierende Frequenzband vollständig in einem der Nyquist-Bereiche zum Liegen kommt.

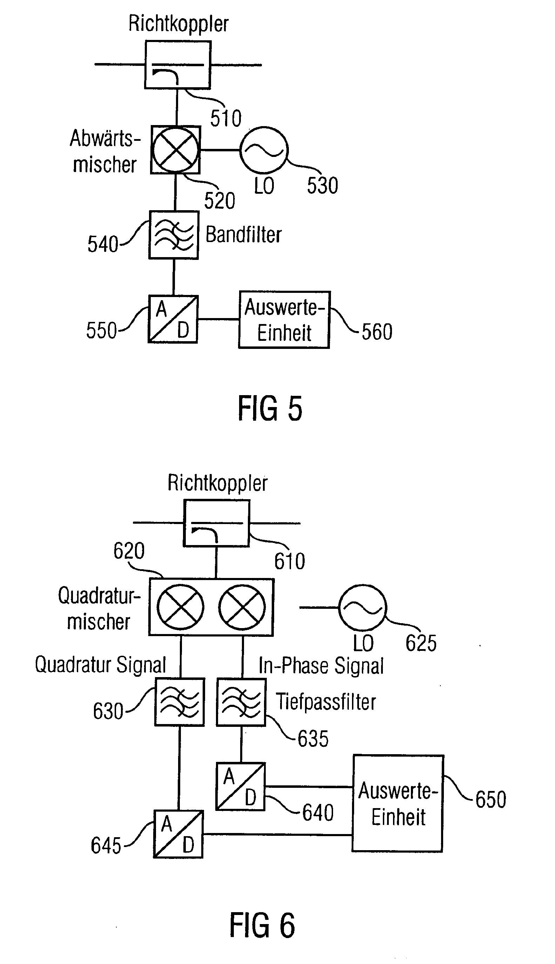

Fig. 5 zeigt ein Ausführungsbeispiel einer solchen Anordnung. Ein Richtkoppler 510 koppelt aus einem Empfangszweig das entsprechende Empfangssignal aus, ein Abwärtsmischer 520, der mit einem Lokaloszillator 530 gekoppelt ist, mischt das Signal in einen Zwischen- oder Basisbandbereich. Ein Bandpassfilter 540, filtert den interessierenden Frequenzbereich aus, das Ausgangssignal des Bandpassfilters 540 wird dann einem Analog-Digitalwandler 550 zugeführt, dessen digitalisiertes Ausgangssignal der Auswerteeinheit 560 bereitgestellt wird. Die Auswertung der jeweiligen Frequenzkanäle in dem Frequenzbereich kann dann gänzlich durch die Auswerteeinheit erfolgen.

In anderen Ausführungsbeispielen kann eine Mehrfachumsetzung erfolgen, d.h. es können mehrere Mischer zum Einsatz kommen, die das entsprechende Signal über ein oder mehrere Zwischenfrequenzen umsetzen.

In weiteren Ausführungsbeispielen ist es möglich, das Frequenzband mit einer direkten Umsetzung (Direct Conversion) in das komplexe Basisband zu mischen und dort nach Tiefpassfilterung mit zwei Analog-Digital-Umsetzern oder - Wandlern abzutasten. Die Fig. 6 zeigt ein solches Ausführungsbeispiel. In der Fig. 6 befindet sich wiederum ein Richtkoppler 610, der in den Empfangs- oder Sendezweig eines oder mehrerer Basisstationssendeempfänger geschaltet sein kann. In dem Ausführungsbeispiel der Fig. 6 wird das von dem Richtkoppler 610 ausgekoppelte Signal einem Quadraturmischer 620 zugeführt, der mit einem Lokaloszillator 625 verbunden ist. Der Quadraturmischer 620 gibt ein Quadratursignal und ein In-Phase-Signal aus, wobei das Quadratursignal einem Tief- oder Bandpassfilter 630 und das In-Phase-Signal einem Tief- oder Bandpassfilter 635 zugeführt werden. Die Ausgangssignale der Filter 630 bzw. 635 werden dann zwei Analog-Digital-Wandlern 640 und 645 zugeführt, deren digitalisierte Ausgangssignale wiederum von einer Auswerteeinheit 650 ausgewertet werden. In Ausführungsbeispielen gemäß der Fig. 6 kann beachtet werden, dass der komplexe Mischer 620 eine ausreichende Spiegelfrequenzunterdrückung erreicht, da sonst Frequenzanteile aus der oberen Bandhälfte in den negativen Frequenzbereich gespiegelt werden können, bzw. umgekehrt, und damit eventuell Messergebnisse verfälscht werden können. Dies kann insbesondere relevant sein, wenn große Pegelunterschiede in den einzelnen Kanälen zu erwarten sind.

Weitere Ausführungsbeispiele, insbesondere mit der stetig zunehmenden Leistungssteigerungen von Analog-Digital-Umsetzern, ist auch eine direkte Abtastung im Hochfrequenzbereich nach Bandpassfilterung denkbar, wobei auch hier die Abtastfrequenz entsprechend der Nyquist-Bedingung zu wählen wäre. Liegt ein Frequenzband erst einmal im digitalen Bereich vor, gibt es wiederum verschiedene Möglichkeiten wie Ausführungsbeispiele einer Auswertung des Frequenzbandes im digitalen Bereich vornehmen können. Beispielsweise wäre eine diskrete Fourier-Transformation, beispielsweise eine Fast Fourier Transformation (FFT) denkbar, nach der dann die Leistung sofort gleichzeitig für alle Frequenzkanäle bestimmt werden könnte. Wird beispielsweise eine Abtastfrequenz von 102,4 MHz gewählt, so wäre es in einem Ausführungsbeispiel denkbar, mit einer FFT-Länge von 256 alle 200 kHz, also am Beispiel von GSM für jeden Frequenzkanal einen Wert zu erhalten. In anderen Ausführungsbeispielen kann die FFT auf eine größere Menge von Abtastwerten zurückgeführt werden, wobei die Abtastwerte in gespeicherter Form vorliegen, so könnte durch eine geeignete Fensterung auch gleichzeitig eine Filterung der Daten erfolgen, was für Signale mit nicht konstanter Hüllkurve, wie beispielsweise beim EDGE, relevant sein könnte.

Im digitalen Bereich können Ausführungsbeispiele jeden interessierenden Kanal herausfiltern und dann dessen Leistung bestimmen. Dies ist nicht auf GSM-Signale beschränkt, beispielsweise könnten auch CDMA-Signale oder OFDM-Signale entsprechend ausgewertet werden. Ausführungsbeispiele können beispielsweise im digitalen Bereich die interessierenden Kanäle in das komplexe Basisband verschieben, beispielsweise mittels einer digitalen Abwärtsmischung, z. B. mit so genannten CIC-Filtern (CIC = Cascaded-Integrator-Comb Filter, kaskadiertes integrierendes Kammfilter), die Datenrate kann reduziert werden und dann durch einen Tiefpass, das beispielsweise durch ein FIR-Filter (FIR = Finite Impulse Response, Filter mit endlicher Impulsantwort) realisiert sein kann, störende Signalanteile unterdrückt werden. Solche Ausführungsbeispiele lassen sich auch durch fertige Bausteine oder Chips realisieren, die die digitale Downconversion (Umsetzung in den Basisbandbereich) und Filterung bereits durchführen. Beispielsweise ließe sich ein solches Ausführungsbeispiel durch einen AD6635 von Analog Devices realisieren, der in der Lage ist acht Kanäle bei einer Abtastrate von 80MHz parallel zu verarbeiten. Alternativ wäre eine GC5018 von Texas Instruments denkbar, der 16 Kanäle bei 160MHz umsetzen kann. Eine Leistungsbestimmung kann in Ausführungsbeispielen z. B. durch

$$a^2 \;=\; i^2 \;+\; q^2$$

erfolgen. Ausführungsbeispiele bieten somit den Vorteil, dass danach leicht eine Demodulation möglich ist, um beispielsweise den Dateninhalt zu identifizieren, wie es z. B. bei der Unterscheidung zwischen Dummybursts und wirklichen Daten geschehen kann.

In konkreten Anwendungsfällen kann es problematisch sein, das Empfangssignal über einen Richtkoppler oder Leistungsteiler auszukoppeln, in Ausführungsbeispielen kann es beispielsweise auch über eine weitere Antenne empfangen werden. Bei Basisstationssendeempfängern werden in der Regel Antennen mit hohen Antennengewinnen verwendet, Ausführungsbeispiele können deswegen sicherstellen, dass eine ausreichende Empfindlichkeit erzielt wird, was beispielsweise durch Einsatz einer Antenne ebenfalls mit hohem Gewinn erzielt werden kann, oder aber durch eine rauscharme Empfangsschaltung, wie sie an den oben beschriebenen Ausführungsbeispielen z. B. durch einen rauscharmen Hochfrequenzempfangsverstärker (LNA) realisiert werden kann.

In Ausführungsbeispielen kann die Leistungsdetektion auch im Sendepfad erfolgen, d. h. die Schaltung wird parallel zu dem oben beschriebenen GSM-Modem entweder über einen Koppler oder über eine Antenne angebunden. Ausführungsbeispiele bieten hierbei den Vorteil, dass am Sender geringe Pegelunterschiede zwischen den verschiedenen Zeitschlitzen bestehen, am Beispiel des GSM hier in der Regel nicht mehr als 30 dB. In diesen Ausführungsbeispielen ist es dann vorteilhaft, dass mit großer Sicherheit ein detektiertes Signal dem Basisstationssendeempfänger zugeordnet werden kann, auch wenn es über eine zusätzliche Antenne empfangen wird. Bei der Detektion im Empfangspfad ist es unter Umständen möglich, dass fälschlicherweise ein Signal von einem Endgerät erkannt wird, das in einer benachbarten Zelle eingebucht ist. Bei der Detektion des Sendesignals erkennen Ausführungsbeispiele die Zeitschlitze bei der BCCH-Frequenz, die keine Information tragen, also Dummybursts sind. Dummybursts werden im GSM-Standard auch Fill Frames (Füllrahmen) genannt. Die dabei verwendeten Datensequenzen sind vordefiniert und somit leicht zu detektieren. In Ausführungsbeispielen kann zusätzlich zu den Leistungsdetektoren ein GMSK-Demodulator eingesetzt werden, welcher dann erlaubt, Zeitschlitze mit so genannten Fill Frames von Zeitschlitzen, welche tatsächliche Nutzdaten transportieren, zu unterscheiden.

Bei der Datenübertragung mit GPRS (GPRS = General Packet Radio Service, genereller Paketdatendienst) kann der Datenverkehr zum Endgerät häufig größer sein als in umgekehrter Richtung. Deshalb besteht die Möglichkeit bei Verfügbarkeit auch mehrere Zeitschlitze in einer Richtung zu verwenden, was in der umgekehrten Richtung nicht unbedingt der Fall sein muss. Für eine exakte Erfassung der verwendeten Zeitschlitze kann in Ausführungsbeispielen auch eine Detektion im Sende- und im Empfangspfad erfolgen.

Ausführungsbeispiele der vorliegenden Erfindung bieten den Vorteil, dass das Datenverkehrsaufkommen beim Mobilfunk bei gemeinsam genutzter Infrastruktur, insbesondere gemeinsam genutzter Antennen, den einzelnen Mobilfunkbetreibern zuordenbar ist und damit eine nutzungsabhängige Verteilung der Installations- und Betriebskosten ermöglicht wird.

Ausführungsbeispiele der vorliegenden Erfindung bieten ferner den Vorteil, dass keine Eingriffe in die Basisstation notwendig sind, da die erfindungsgemäßen Vorrichtungen und Verfahren auf Signalen basieren, die zwischen Basisstationssendeempfänger und Antenne abgegriffen bzw. ausgekoppelt oder empfangen werden können. Durch die durch Ausführungsbeispiele ermöglichte genaue Erfassung des Datenverkehrs werden Szenarien, in denen mehrere Mobilfunkbetreiber einen Basisstationssendeempfängerstandort, einen Container, ein Antennensystem usw. benutzen, attraktiver. Ausführungsbeispiele tragen somit entscheidend dazu bei, die kritische Lage auf dem Basisstationssendeempfängerstandortmarkt zu entspannen.

Weitere Ausführungsbeispiele sind von den Basisstationssendeempfängerstandorten losgekoppelt. Jeder Basisstationssendeempfänger verfügt wie bereits oben erläutert über eine eindeutige Identifikation. Ausführungsbeispiele der vorliegenden Erfindung können die Nutzung einer Antenne beispielsweise anhand der von dieser Antenne abgestrahlten Sendesignale erfassen. Die Sendesignale können beispielsweise über eine Antenne empfangen werden, so dass erfindungsgemäße Vorrichtungen in der Lage sind, die Nutzungsanteile einer Antenne auch zu bestimmen, wenn sie nicht mit dem Basisstationssendeempfänger bzw. den Basisstationssendeempfängern gekoppelt sind. Beispielsweise könnte in einem Ausführungsbeispiel sich eine erfindungsgemäße Vorrichtung in der Mitte einer Mobilfunkzelle befinden, wobei die Basisstationskennungen verschiedener Mobilfunkbetreiber, die die entsprechende zu vermessende Antenne gemeinsam benutzen, bekannt seien. Ausführungsbeispiele der vorliegenden Erfindung können also auch an von den Basisstationssendeempfängerstandorten unterschiedlichen Standorten errichtet werden. Daraus ergeben sich weitere Vorteile, da beispielsweise mit einer zentralen Anordnung von Ausführungsbeispielen zur Vermessung mehrerer Standorte, der Implementierungsaufwand begrenzt werden kann.

Insbesondere wird darauf hingewiesen, dass abhängig von den Gegebenheiten das erfindungsgemäße Schema auch in Software implementiert sein kann. Die Implementation kann auf einem digitalen Speichermedium, insbesondere einer Diskette, einer CD oder einer DVD mit elektronisch auslesbaren Steuersignalen erfolgen, die so mit einem programmierbaren Computersystem zusammenwirken können, dass das entsprechende ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogrammprodukt auf einem Computer abläuft.

Bezugszeichenliste

| | |
|---|---|
| 100 | Vorrichtung zum Bestimmen einer Sendekapazität |
| 110 | Empfänger |
| 120 | Detektor |
| 130 | Recheneinheit |
| 200 | Vorrichtung zum Bestimmen einer Übertragungskapazität |

| | |
|---|---|
| 210 | Empfänger |
| 220 | Detektor |
| 230 | Recheneinheit |
| | |
| 310 | Basisstationssendeempfänger 1 |
| 312 | Basisstationssendeempfänger 1 Empfangsteil |
| 314 | Basisstationssendeempfänger 1 Sendeteil |
| 320 | Basisstationssendeempfänger 2 |
| 322 | Basisstationssendeempfänger 2 Empfangsteil |
| 324 | Basisstationssendeempfänger 2 Sendeteil |
| 330 | Antenne |
| 335 | Sendeempfangsweise |
| 340 | rauscharmer Hochfrequenzeingangsverstärker |
| 345 | Richtkoppler |
| 350 | Abwärtsmischer |
| 355 | Lokaloszillator |
| 360 | Kanalfilter |
| 365 | Leistungsdetektor |
| 370 | Digitalisierung |
| 375 | Splitter |
| 380 | Combiner/Kombinierer |
| 385 | Mehrträgerleistungsverstärker |
| 390 | Richtkoppler |
| 394 | Dämpfungsglied |
| 398 | GSM-Modem |
| | |
| 410 | Splitter |
| 420 | Empfänger 1 |
| 421 | Abwärtsmischer 1 |
| 422 | Lokaloszillator 1 |
| 423 | Kanalfilter 1 |
| 424 | Leistungsdetektor 1 |
| 425 | Digitalisierer 1 |
| 430 | Empfänger 2 |
| 431 | Abwärtsmischer 2 |
| 432 | Lokaloszillator 2 |
| 433 | Kanalfilter 2 |
| 434 | Leistungsdetektor 2 |
| 435 | Digitalisierer 2 |
| 440 | Empfänger 3 |
| 441 | Abwärtsmischer 3 |
| 442 | Lokaloszillator 3 |
| 443 | Kanalfilter 3 |
| 444 | Leistungsdetektor 3 |
| 445 | Digitalisierer 3 |
| 450 | Auswerteeinheit |
| | |
| 510 | Richtkoppler |
| 520 | Abwärtsmischer |
| 530 | Lokaloszillator |
| 540 | Bandpassfilter |
| 550 | Analog-Digital-Wandler |
| 560 | Auswerteeinheit |
| | |
| 610 | Richtkoppler |
| 620 | Quadraturmischer |
| 625 | Lokaloszillator |
| 630 | Tiefpassfilter |

| | |
|---|---|
| 635 | Tiefpassfilter |
| 640 | Analog-Digital-Wandler |
| 645 | Analog-Digital-Wandler |
| 650 | Auswerteeinheit |
| | |
| 710 | Basisstationssendeempfänger 1 |
| 1712 | Basisstationssendeempfänger 1 Empfangsteil |
| 714 | Basisstationssendeempfänger 1 Sendeteil |
| 720 | Basisstationssendeempfänger 2 |
| 722 | Basisstationssendeempfänger 2 Empfangsteil |
| 724 | Basisstationssendeempfänger 2 Sendeteil |
| 730 | Kombinierer/Combiner |
| 740 | Sendeempfangsweiche RX/TX-Weiche |
| 750 | Antenne |
| 760 | rauscharmer Hochfrequenzempfangsverstärker (LNA) |
| 770 | Splitter |
| 780 | Mehrträgerleistungsverstärker (MCPA) |

**Patentansprüche**

1. Vorrichtung (100) zum Bestimmen einer genutzten Sendekapazität eines Basisstationssendeempfängers zum Senden eines Sendesignals, mit folgenden Merkmalen:

   einem Empfänger (110), mit dem das Sendesignal empfangbar ist;
   einem Detektor (120) zum Überprüfen einer Anzahl von nutzbaren Sendekanälen aus dem Sendesignal auf deren Nutzung hin; und
   einer Recheneinheit (130) zum Berechnen der genutzten Sendekapazität basierend auf einem Ergebnis der Überprüfung.

2. Vorrichtung (100) gemäß Anspruch 1, bei der der Detektor (120) ausgebildet ist, um die Nutzung der nutzbaren Sendekanäle unabhängig von gesendeten Daten in den Sendekanälen zu überprüfen.

3. Vorrichtung (100) gemäß einem der Ansprüche 1 oder 2, bei der der Detektor (120) ausgebildet ist, um das Sendesignal hinsichtlich genutzter Frequenzen, Zeitschlitze oder Codes zu überprüfen, wobei ein Sendekanal einer Frequenz, einem Zeitschlitz, einem Code, einer Mehrzahl von Frequenzen oder einer Kombination dergleichen zuordenbar ist.

4. Vorrichtung (100) gemäß einem der Ansprüche 1 bis 3, bei der der Detektor (120) ausgebildet ist, um eine Nutzung eines Sendekanals über eine Leistungsdetektion in dem Sendesignal zu überprüfen.

5. Vorrichtung (100) gemäß einem der Ansprüche 1 bis 4, bei der der Empfänger (110) einen Richtkoppler oder einen Leistungsteiler aufweist, der in einem Sendepfad des Basisstationssendeempfängers ankoppelbar ist, um das Sendesignal auszukoppeln.

6. Vorrichtung (100) gemäß einem der Ansprüche 1 bis 5, die ferner ein Modem aufweist, mit dem Informationen aus dem Sendesignal detektierbar sind.

7. Vorrichtung (100) gemäß Anspruch 6, bei der das Modem ferner ausgebildet ist, um die nutzbaren Sendekanäle aus einem Kontrollkanal des Basisstationssendeempfängers zu bestimmen.

8. Vorrichtung (100) gemäß einem der Ansprüche 1 bis 7, bei der der Empfänger (110) ferner ein Kanalfilter zum Filtern eines Sendekanals aufweist.

9. Vorrichtung (100) gemäß einem der Ansprüche 1 bis 8, bei der der Detektor (120) ausgebildet ist, um Informationen über die nutzbaren Sendekanäle von einem Benutzer zu erhalten.

10. Verfahren zum Bestimmen einer genutzten Sendekapazität eines Basisstationssendeempfängers zum Senden eines Sendesignals, mit folgenden Schritten:

Empfangen des Sendesignals;
Überprüfen einer Anzahl von nutzbaren Sendekanälen aus dem Sendesignal auf deren Nutzung hin; und
Berechnen der genutzten Sendekapazität basierend auf einem Ergebnis der Überprüfung.

11. Vorrichtung (200) zum Bestimmen einer genutzten Übertragungskapazität eines Basisstationssendeempfängers zum Empfangen eines Empfangssignals, mit folgenden Merkmalen:

einem Empfänger (210), mit dem das Empfangssignal empfangbar ist;
einem Detektor (220) zum Überprüfen einer Anzahl von nutzbaren Empfangskanälen aus dem Empfangssignal auf deren Nutzung hin; und
einer Recheneinheit (230) zum Berechnen der genutzten Übertragungskapazität basierend auf einem Ergebnis der Überprüfung.

12. Vorrichtung (200) gemäß Anspruch 11, bei der der Detektor (220) ausgebildet ist, um die Nutzung der nutzbaren Empfangskanäle unabhängig von gesendeten Daten in den Empfangskanälen zu überprüfen.

13. Vorrichtung (200) gemäß einem der Ansprüche 11 oder 12, bei der der Detektor (220) ausgebildet ist, um das Empfangssignal hinsichtlich genutzter Frequenzen, Zeitschlitze oder Codes zu überprüfen, wobei ein Empfangskanal einer Frequenz, einem Zeitschlitz, einem Code, einer Mehrzahl von Frequenzen oder einer Kombination dergleichen zuordenbar ist.

14. Vorrichtung (200) gemäß einem der Ansprüche 11 bis 13, bei der der Detektor (220) ausgebildet ist, um eine Nutzung eines Empfangskanals über eine Leistungsdetektion in dem Empfangskanal zu überprüfen.

15. Vorrichtung (200) gemäß einem der Ansprüche 11 bis 14, bei der der Empfänger (210) eine Empfangsantenne zum Empfangen des Empfangssignals und einen rauscharmen Hochfrequenzeingangsverstärker aufweist.

16. Vorrichtung (200) gemäß einem der Ansprüche 11 bis 15, bei der der Empfänger (210) einen Richtkoppler oder einen Leistungsteiler aufweist, der in einen Empfangspfad des Basisstationssendeempfängers ankoppelbar ist, um das Empfangssignal auszukoppeln.

17. Vorrichtung (200) gemäß einem der Ansprüche 11 bis 16, bei der der Empfänger (210) ferner ein Kanalfilter zum Filtern eines Empfangskanals aufweist.

18. Vorrichtung (200) gemäß einem der Ansprüche 11 bis 17, bei der der Detektor (220) ausgebildet ist, um Informationen über die nutzbaren Empfangskanäle von einem Modem oder einem Benutzer zu erhalten.

19. Verfahren zum Bestimmen einer genutzten Übertragungskapazität eines Basisstationssendeempfängers zum Empfangen eines Empfangssignals, mit folgenden Schritten:

Empfangen des Empfangssignals;
Überprüfen einer Anzahl von nutzbaren Empfangskanälen aus dem Empfangssignal auf deren Nutzung hin; und
Berechnen der genutzten Übertragungskapazität basierend auf einem Ergebnis der Überprüfung.

20. Computerprogramm mit einem Programmcode zur Durchführung eines der Verfahren gemäß Anspruch 10 oder 19, wenn das Computerprogramm auf einem Computer abläuft.

21. System zum Bestimmen einer genutzten Übertragungskapazität eines Basisstationssendeempfängers mit einer Vorrichtung gemäß einem der Ansprüche 1 bis 9 und einer Vorrichtung gemäß einem der Ansprüche 11 bis 18.

| Empfänger | Detektor | Recheneinheit |

110          120          130

100

# FIG 1

| Empfänger | | Detektor | | Recheneinheit |
|---|---|---|---|---|

210   220   230

200

# FIG 2

FIG 3

EP 2 031 780 A2

FIG 4

Richtkoppler

Abwärtsmischer

510

520

530

LO

540 Bandfilter

550 A/D    Auswerte-
Einheit    560

**FIG 5**

Richtkoppler

620    610

Quadraturmischer

LO    625

Quadratur Signal    In-Phase Signal

630    Tiefpassfilter
635

A/D    640    Auswerte-
Einheit    650

645    A/D

**FIG 6**

FIG 7 (Stand der Technik)

FIG 8 (Stand der Technik)